# EUROPEAN PATENT APPLICATION

(11) **EP 4 043 127 A1**
(43) Date of publication of application: **17.08.2022**
(21) Application number: 20873959.9
(22) Date of filing: 25.09.2020
(51) Int. Cl.: B23B 29/02, B23B 35/00, B23B 41/00, B23B 39/22

(54) **BORING CUTTING TOOL, BORING MACHINE AND BORING METHOD**

(30) Priority: 11.10.2019 JP 2019187334
(71) Applicant: Haru Technique Laboratory Inc., Okayama-shi, Okayama 703-8215 (JP)
(72) Inventor: MANDAI Haruo, Okayama-shi, Okayama 703-8215 (JP)
(74) Representative: De Arpe Tejero, Manuel
(86) International application number: PCT/JP2020/036202
(87) International publication number: WO 2021/070630

(57) **Abstract**

A cutting tool for boring (40) that is attached to a machining apparatus and used for cutting a hole (13) on a large-diameter side of a stepped hole of a workpiece (10) is provided. The cutting tool for boring (40) is a set of two tools, and each cutting tool for boring (40a, 40b) in the set of two includes a shaft part (41), a cutting blade (42) laterally protruding from the respective shaft parts (41), and an abutment surface (43) formed at the tip of each shaft part (41) and used to cause the tips of the respective shaft parts (41) to butt against each other. Each cutting tool for boring (40a, 40b) performs cutting while the two cutting tools for boring (40a, 40b) rotate integrally around the center line of the shaft parts (41) in a coupled state in which the tips of the cutting tools for boring (40a, 40b) are butted together.

## Description

### TECHNICAL FIELD

The present disclosure relates to a cutting tool for boring that is attached to a machining apparatus and used for cutting a hole on a large-diameter side of a stepped hole of a workpiece, and also relates to a machining apparatus for boring and a method for boring that use the cutting tool.

### BACKGROUND

Various kinds of machining apparatuses for cutting of differential cases and differential carriers are already known. For example, Patent Literature 1 proposes a machining apparatus for a differential case, the machining apparatus including: a shuttle unit which is rotatable and is slidable in the front-rear direction; an inner surface machining cutting tool changing apparatus that slides in the vertical direction; and a pair of left and right machining units arranged opposing each other so as to sandwich a workpiece; the machining apparatus enabling machining of different areas of a differential case without impairing the versatility and while also having a simple structure.

By using such a machining apparatus for a differential case, boring of a side gear hole provided in the differential case is enabled. A side gear hole is provided by expanding the diameter of an end portion on the inner side of a through hole. A tool having a cutting edge protruding laterally from a shaft part is attached to the machining unit of the machining apparatus, and after the tool is inserted into the through hole, by causing the shuttle unit to slide in the front-rear direction, the cutting edge of the tool comes in contact with the inner circumferential surface of the side gear hole, and the side gear hole can thus be machined using the tool.

In a case where side gear holes are composed of a pair of left-and-right side gear holes, the respective side gear holes of the pair of left-and-right side gear holes can be machined using respective tools attached to the respective machining units of the pair of left and right machining units. In this case, because each of the tools rotates in a cantilevered state, there is a concern that the machining accuracy may decrease due to chattering of the tool. In this regard, in an inner surface machining apparatus disclosed in Patent Literature 2, a center shaft is brought into contact with a cantilever-supported long cutting tool so that the long cutting tool enters a state as if both ends of the long cutting tool are held and supported, thus attempting to stabilize the posture of the long cutting tool and thereby avoid as much as possible the occurrence of vibrations or deviations in the position of the long cutting tool and thus increase the accuracy of cutting an inner circumferential surface of a cylindrical portion.

### Citation List

### Patent Literature

Patent Literature 1: Japanese Patent Application Laid-open No. 2014-195851
Patent Literature 2: Japanese Patent Application Laid-open No. 2007-30101

### SUMMARY

However, in the inner surface machining apparatus disclosed in Patent Literature 2, a first saddle for driving the long cutting tool is only provided on one side of the workpiece, and the center shaft only has a role of supporting the long cutting tool, and does not have a cutting function. Further, in Patent Literature 2, although it is described that inner circumferential surface machining of both left and right cylindrical portions can be completed at one time by movement of the long cutting tool in one direction, in such a case it is necessary to make the length of the long cutting tool longer, and a long cutting tool having a longer size is disadvantageous with respect to preventing vibration and preventing deviations in the position of the long cutting tool.

The present disclosure has been made with a view to solving the conventional problems described above, and an object of the present disclosure is to provide a cutting tool for boring, a machining apparatus for boring and a method for boring which are advantageous for reducing a cutting time while also preventing a decrease in machining accuracy caused by chatter of a tool.

To achieve the above object, a cutting tool for boring of the present disclosure is a cutting tool for boring that is attached to a machining apparatus and used for cutting of a hole on a large-diameter side of a stepped hole of a workpiece, the machining apparatus including a pair of left and right machining units arranged opposing each other so as to sandwich a workpiece, the cutting tool for boring being provided in a set of two which are attached to the pair of left and right machining units respectively, each of the cutting tools for boring in the set of two including: a shaft part; a cutting blade laterally protruding from the respective shaft parts; and an abutment surface that is formed at a tip of the respective shaft parts and that is for causing the tips of the respective shaft parts to butt against each other, wherein each of the cutting tools for boring performs the cutting while the two cutting tools for boring rotate integrally around a center line of the shaft part in a coupled state in which the tips of the respective cutting tools for boring are butted together.

According to this configuration, since the set of two cutting tools for boring can perform cutting of an inner circumferential surface of a hole while rotating around the center line in a state in which the cutting tools for boring are both held by the left and right machining units, chattering is prevented and the cutting accuracy increases. More specifically, in addition to an increase in accuracy with respect to the cylindricality, roundness and concentricity of the hole, the accuracy of the surface roughness of the inner circumferential surface of the hole also increases.

Further, since the respective cutting tools for boring of the set of two have a cutting blade on the respective shaft parts, when cutting two holes, a dedicated cutting tool is used to cut each hole, and hence the length of the shaft parts can be kept to a moderate length, and this fact is also advantageous for preventing chattering. In addition, it is also possible to perform cutting of two holes having different diameters by changing the cutting tool once.

In the cutting tool for boring of the present disclosure, preferably, among the cutting tools for boring of the set of two, one cutting tool for boring is provided with an extension part extending from the abutment surface, and the other cutting tool for boring is provided with a hole into which the extension part enters. According to this configuration, the set of two cutting tools can be prevented from slipping during rotation.

Further, preferably a length of the extension part is a length that, while the one cutting tool for boring and the other cutting tool for boring are being moved in opposite directions to each other with respect to a center line direction of the shaft part, is able to maintain a state in which the extension part has entered the hole, when machining of a hole of the workpiece is completed. According to this configuration, it is possible to machine two holes on the left and right at the same time, and thus the cutting time can be shortened.

A machining apparatus of the present disclosure is a machining apparatus that uses the respective cutting tools for boring, and includes a pair of left and right machining units arranged opposing each other so as to sandwich a workpiece. A method for boring of the present disclosure is a method for boring using the respective cutting tools for boring, wherein: in a state in which the cutting tools for boring of the set of two are arranged so that the abutment surfaces of the respective cutting tools for boring in the set of two are butted together, and a rear end side of each of the cutting tools for boring is supported by the machining apparatus, while causing the cutting tools for boring of the set of two to rotate around the center line and to move in the center line direction, an inner circumferential surface of a hole of the workpiece is cut with the cutting blade.

According to the machining apparatus for a differential case and the machining method for a differential case of the present disclosure, since the cutting tool for machining a differential case of the present disclosure is used, in addition to an increase in the cutting accuracy, the length of the shaft part of the cutting tool can be kept to a moderate length, and it is also possible to perform cutting of two holes having different diameters by changing the cutting tool once.

The advantageous effects of the present disclosure are as described above and may be summarized by saying that since the set of two cutting tools for boring can perform cutting of an inner circumferential surface of a hole while rotating around the center line in a state in which the cutting tools for boring are both held by the left and right machining units, chattering is prevented and the cutting accuracy increases, and since the respective cutting tools for boring have a cutting blade on the respective shaft parts, when cutting two holes, a dedicated cutting tool is used to cut each hole, and hence the length of the shaft parts can be kept to a moderate length, and in addition it is also possible to perform cutting of two holes having different diameters by changing the cutting tool once.

### BRIEF DESCRIPTION OF THE DRAWINGS

Fig. 1 is a perspective view of a workpiece that is an object of machining by a machining apparatus according to one embodiment of the present disclosure;
Fig. 2 is a longitudinal sectional view of the workpiece illustrated in FIG. 1;
Fig. 3 is a front view of the machining apparatus according to one embodiment of the present disclosure;
Fig. 4 is a perspective view illustrating a state immediately before boring of a workpiece by a cutting tool for boring according to one embodiment of the present disclosure;
Fig. 5 is a view illustrating a state in which initial setting of the position of a workpiece has been completed in one embodiment of the present disclosure;
Fig. 6 is a view illustrating a state in which a pair of cutting tools are passing through a differential bearing seat surface and a differential bearing hole in one embodiment of the present disclosure;
Fig. 7 is a view illustrating a state in which horizontal movement of a pair of cutting tools has been completed in one embodiment of the present disclosure;
Fig. 8 is a view illustrating a state in which the workpiece has been moved downward by an amount Δd from the state illustrated in Fig. 7;
Fig. 9 is a view illustrating a state in which a differential bearing hole is being cut with a cutting blade in one embodiment of the present disclosure;
Fig. 10 is a perspective view of the vicinity of a workpiece in a state during cutting of a differential bearing hole in one embodiment of the present disclosure;
Fig. 11 is a view illustrating a state in which cutting of a differential bearing hole on a left side has been completed in one embodiment of the present disclosure;
Fig. 12 is a view illustrating a state in which a differential bearing hole on a right side is being cut with a cutting blade in one embodiment of the present disclosure;
Fig. 13 is a view illustrating a state in which cutting of the bearing hole on the right side has been completed in one embodiment of the present disclosure;
Fig. 14 is a view illustrating a coupled state of a pair of cutting tools when new cutting tools are used according to one embodiment of the present disclosure;
Fig. 15 is a view illustrating a state in which the cutting tools have moved from the state illustrated in Fig. 14, and left and right differential bearing holes are being cut with the cutting blades;
Fig. 16 is a view illustrating a state in which the cutting tools have moved from the state illustrated in Fig. 15, and cutting of the left and right differential bearing holes has been completed;
Fig. 17 is a view illustrating a state before cutting of a pinion hole and an oil seal hole in one embodiment of the present disclosure;
Fig. 18 is a view illustrating another example of a state before cutting of a pinion hole and an oil seal hole in one embodiment of the present disclosure;
Fig. 19 is a view illustrating various embodiments of a tip portion of a cutting tool; and
Fig. 20 is a longitudinal sectional view of one example of a differential case.

### DETAILED DESCRIPTION OF THE EMBODIMENTS

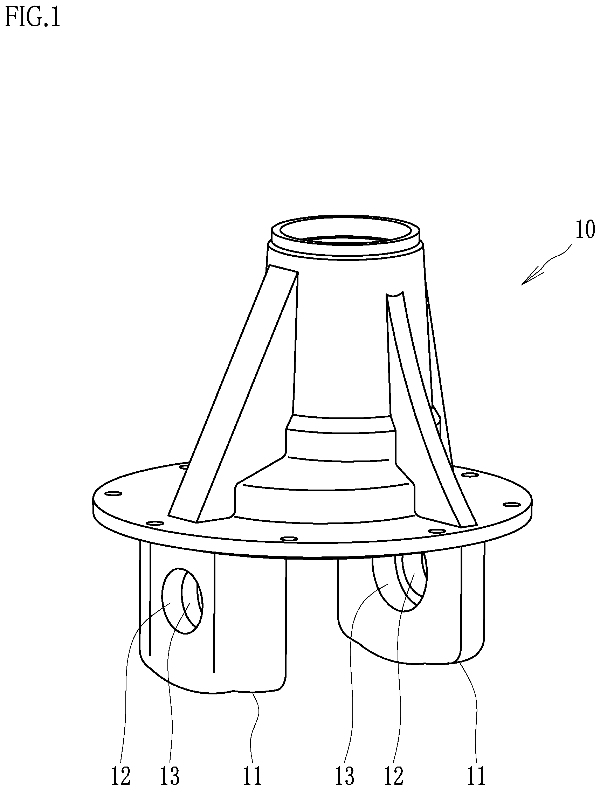

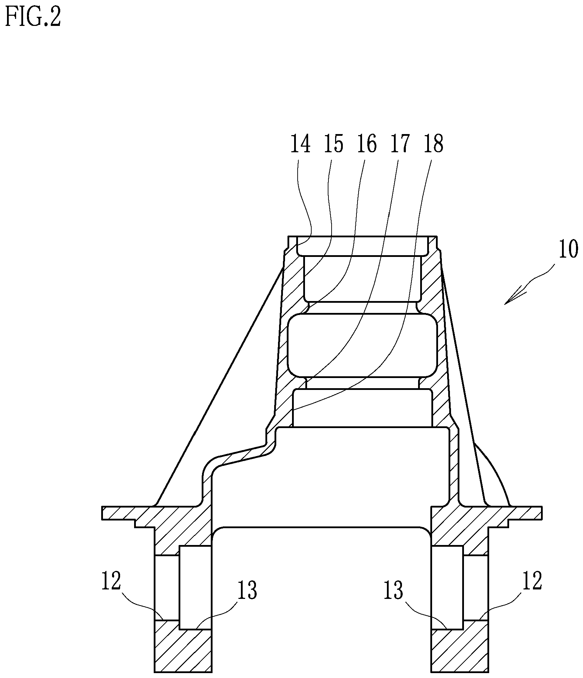

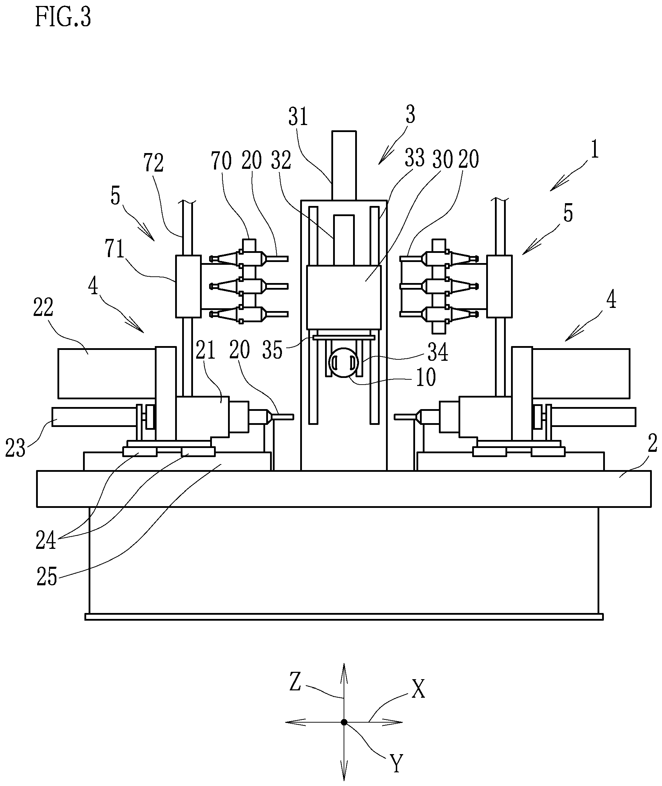

Hereunder, one embodiment of the present disclosure will be described with reference to the drawings. First, a workpiece 10 that is an object of machining of a machining apparatus 1 (see Fig. 3) according to one embodiment of the present disclosure will be described with reference to Fig. 1 and Fig. 2. Fig. 1 is a perspective view of the workpiece 10, and Fig. 2 is a longitudinal sectional view of the workpiece 10 illustrated in Fig. 1. The workpiece 10 is a differential carrier. The differential carrier houses a drive pinion gear and a ring gear which are final gears, in addition to a differential case which has a built-in differential transmission mechanism.

In Fig. 1, a differential bearing seat surface 12 and a differential bearing hole 13 are formed in each of left and right legs 11. As illustrated in Fig. 2, a stepped hole is formed by a small-diameter hole forming the differential bearing seat surface 12, and a large-diameter hole forming the differential bearing hole 13. Further, in a cylindrical portion of the differential carrier 10, an oil seal hole 14, a pinion hole 15, a release hole 16, a release hole 17 and a pinion hole 18 are formed in that order from the upper side.

Hereunder, the machining apparatus 1 according to one embodiment of the present disclosure will be described. First, the configuration of the machining apparatus 1 will be schematically described with reference to Fig. 3. Fig. 3 is a front view of the machining apparatus 1 according to one embodiment of the present disclosure. In Fig. 3, a shuttle unit 3, machining units 4, and an ATC (automatic tool changer) 5 are mounted on a base 2.

The shuttle unit 3 holds the workpiece 10, and can rotate the workpiece 10. The shuttle unit 3 includes an elevating body 30, and is movable integrally with the elevating body 30 in a Y-direction (front-rear direction). The elevating body 30 is movable in a Z-direction (vertical direction) along a guide 33 by rotation of a ball screw 32 that is caused by a motor 31. The elevating body 30 includes a clamper 34 that holds the workpiece 10, and a rotary mount 35 that rotates the clamper 34.

The machining units 4 are a left and right pair and are arranged opposing each other so as to allow the workpiece 10 that was moved downward from the position illustrated in Fig. 3 to be sandwiched therebetween. A tool 20 is attached to a tip of each of the machining units 4. In the present embodiment, tools 20 can be selectively used in accordance with an area to be machined, and the tool 20 attached to the respective machining units 4 is automatically replaced with a required one of the tools 20 by the ATC 5.

The ATC 5 includes a rotating disk 70, and the plurality of tools 20 are removably attached to the rotating disk 70. The elevating body 71 is guided by a guide shaft 72, allowing the ATC 5 to vertically move. When replacing the tool 20, the elevating body 71 descends and the tool 20 attached to the tip of the respective machining units 4 is replaced with the tool 20 that is attached to the rotating disk 70 of the ATC 5.

The machining units 4 each include a housing 21, a motor for tool drive 22, and a motor for sliding 23. A driving force of the motor for tool drive 22 is transferred to a driving force transfer mechanism (not illustrated), causing the tool 20 to rotate. A driving force of the motor for sliding 23 is transferred to a ball screw mechanism (not illustrated). This causes the respective machining units 4 to slide and perform a reciprocating motion in the X-axis direction (transverse direction). More specifically, a slider 24 that is integral with the respective machining units 4 slides along a guide rail 25.

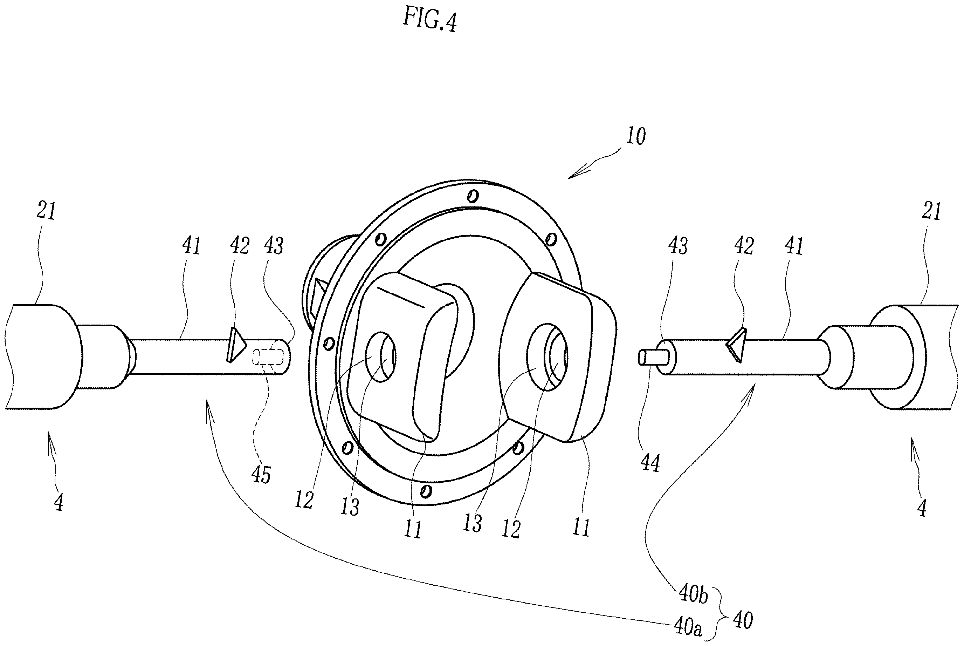

Hereunder, a cutting tool for boring is described with reference to Fig. 4. Fig. 4 illustrates a state immediately before boring of the workpiece 10 by a cutting tool for boring (hereinafter, referred to simply as "cutting tool") 40. Although the cutting tool 40 is a tool included among the tools 20 that are attached to the tip of the respective machining units 4 in Fig. 3, for convenience of description the cutting tool is denoted by reference numeral 40 to distinguish the cutting tool 40 from the tools 20.

The cutting tool 40 is provided in a set of two, and for convenience of description one of the cutting tool 40 will be referred to as cutting tool 40a and the other will be referred to cutting tool 40b. The cutting tool 40a and the cutting tool 40b each include a shaft part 41, a cutting blade 42 laterally protruding from the shaft part 41, and an abutment surface 43 that is formed at a tip of the shaft part 41 and that is for causing the tips of the shaft parts to butt against each other. An extension part 44 is integrated with the abutment surface 43 of the cutting tool 40a, and a hole 45 having an opening at the position of the abutment surface 43 is formed in the abutment surface 43 of the cutting tool 40b.

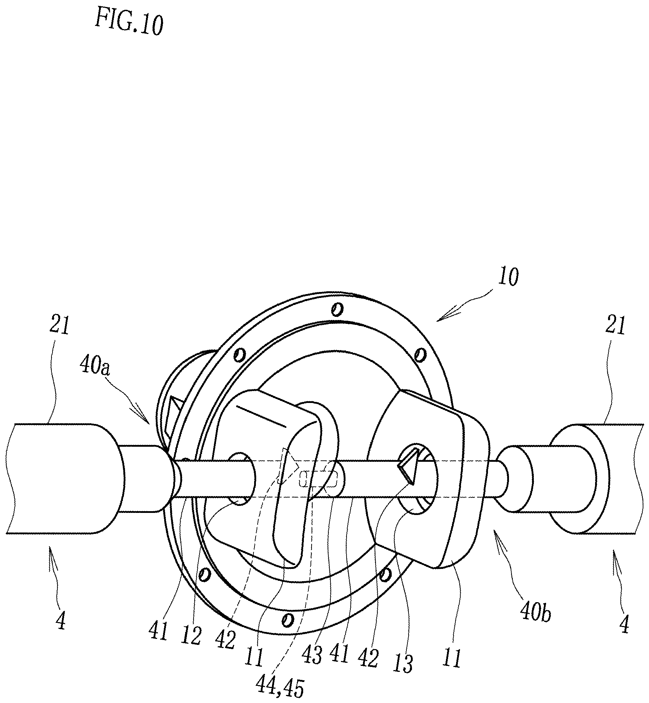

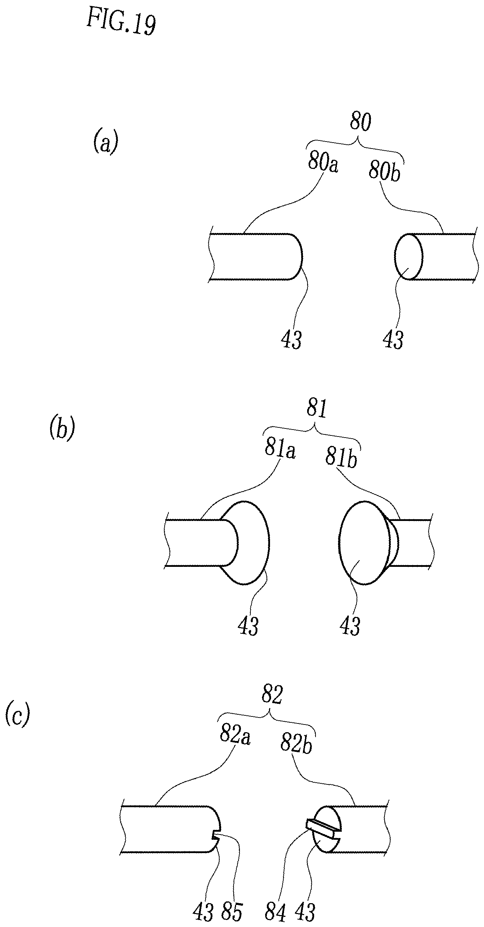

As will be described later in detail, during cutting, the extension part 44 enters into the hole 45 and the abutment surfaces 43 butt against each other, and a state is entered in which the cutting tool 40a and the cutting tool 40b are coupled and are both held by the housings 21 of the left and right machining units 4 (see Fig. 10). In Fig. 4, the extension part 44 is a flat shape, and when the extension part 44 has entered into the hole 45, slipping of the rotating cutting tool 40a and cutting tool 40b can be prevented. The extension part 44 may be a columnar shape, and as described later using Figs. 19(a) and (b), the extension part 44 may be omitted, and even in the case of these configurations, slip prevention can be achieved by synchronization of the rotational torques and positions of the cutting tool 40a and the cutting tool 40b.

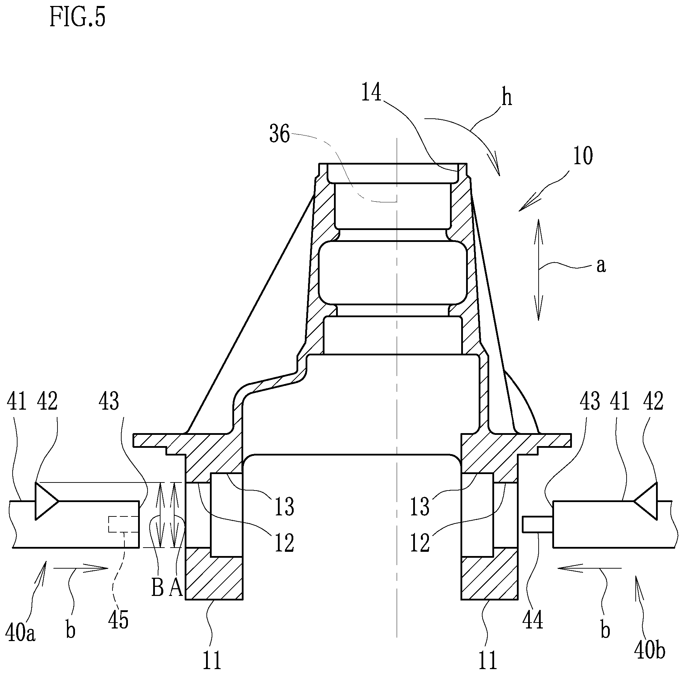

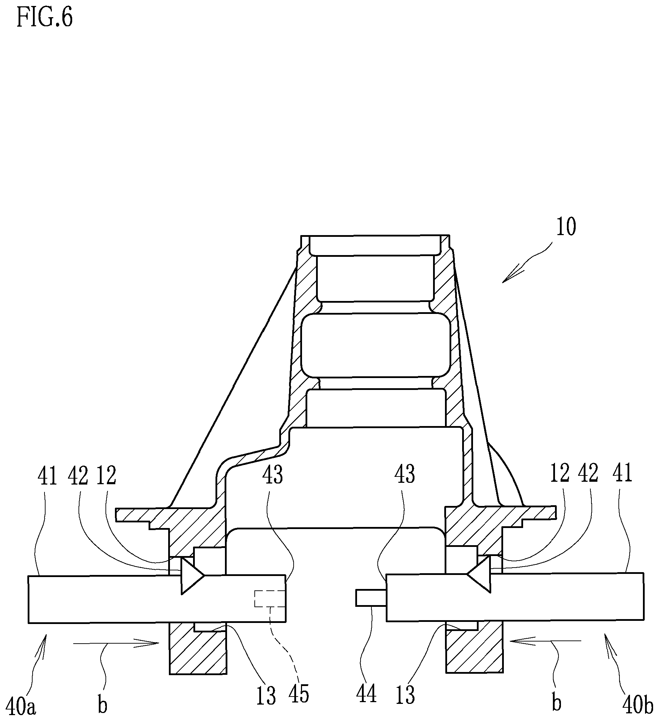

Hereunder, the process of machining the workpiece 10 is described in detail with reference to Fig. 5 to Fig. 13. Fig. 5 illustrates a state in which initial setting of the position of the workpiece 10 has been completed. The workpiece 10 is illustrated in a state as viewed from above, and for convenience a cross-sectional state thereof is illustrated, with the oil seal hole 14 side being the inner side of the machining apparatus 1 (see Fig. 3), and the side of the left and right legs 11 being the operator side (the same also applies with respect to Fig. 6 to Fig. 9, and Fig. 11 to Fig. 16). As a result of lowering the elevating body 30 of the shuttle unit 3, the workpiece 10 that was above the machining units 4 in the state illustrated in Fig. 3 has descended as far as an initial setting position at which the differential bearing seat surface 12 of the workpiece 10 faces the abutment surface 43 of each of the cutting tool 40a and the cutting tool 40b.

The initial setting position is the position of the workpiece 10 in a height direction in which the cutting tool 40a and the cutting tool 40b can pass through the respective differential bearing seat surfaces 12 when the cutting tool 40a and the cutting tool 40b advance as a result of horizontal movement of the respective machining units 4 (arrow b). A height B including the cutting blade 42 of the cutting tool 40a and the cutting tool 40b is less than a diameter A of the differential bearing seat surface 12. Therefore, by setting the position in the height direction and front-rear direction (arrow a) of the workpiece 10 at a predetermined position, it is possible for the cutting tool 40a and the cutting tool 40b to pass through the respective differential bearing seat surfaces 12.

Fig. 6 a view illustrating a state in which the cutting tool 40a and the cutting tool 40b are passing through the respective differential bearing seat surfaces 12 and differential bearing holes 13. In the state illustrated in Fig. 6, since the workpiece 10 is maintained in the initial setting position thereof, it is possible for the cutting tool 40a and the cutting tool 40b to pass through the respective differential bearing seat surfaces 12, and to also pass through the respective differential bearing holes 13 which have a larger diameter than the differential bearing seat surfaces 12.

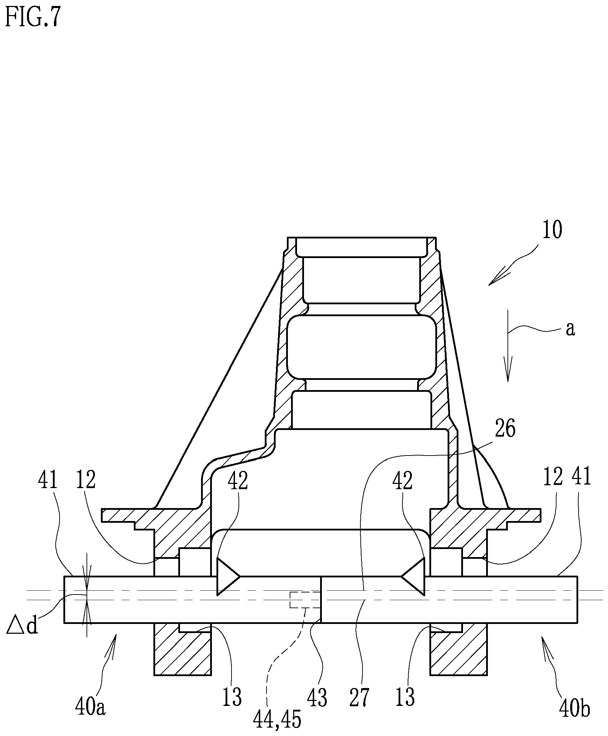

Fig. 7 illustrates a state in which horizontal movement of the cutting tool 40a and the cutting tool 40b has been completed. In the state in Fig. 7, the abutment surfaces 43 of the cutting tool 40a and the cutting tool 40b are butted together, and the extension part 44 has entered into the hole 45. Further, a center line 26 of the respective differential bearing holes 13 is located further to the rear side by an amount Δd relative to a center line 27 of the shaft part 41 of each of the cutting tool 40a and the cutting tool 40b, and thus the center line 26 and the center line 27 do not coincide with each other. In this case, if the workpiece 10 is caused to move forward (arrow a) by the amount of Δd from the state in Fig. 7, the center line 26 and the center line 27 will coincide with each other.

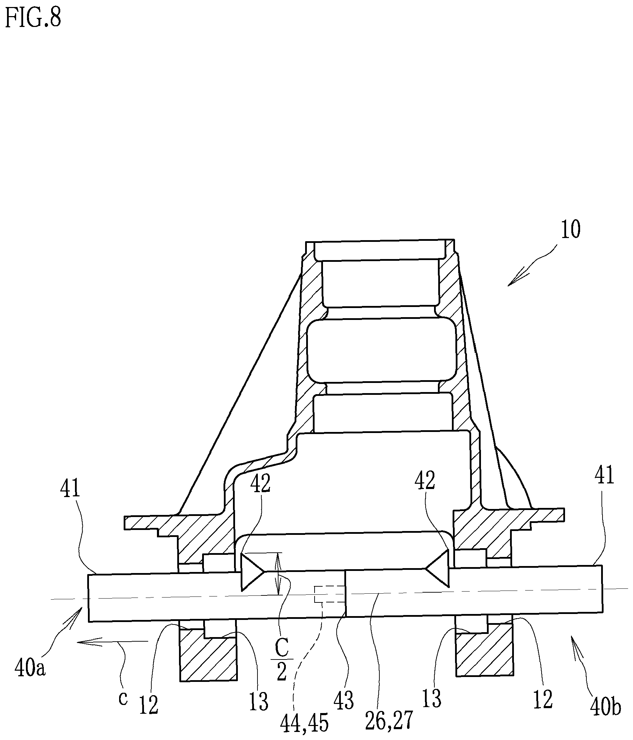

Fig. 8 illustrates a state in which the workpiece 10 has moved forward by the amount of Δd from the state in Fig. 7. In this state, the center line 27 of the shaft part 41 of each of the cutting tool 40a and the cutting tool 40b coincides with the center line 26 of the respective differential bearing holes 13. In this state, when the cutting tool 40a and the cutting tool 40b are rotated around the center line 27, the trajectory of the tip edge of the cutting blade 42 is a circle with a radius C/2 centered on the center line of the differential bearing holes 13. Therefore, in a state in which the cutting blade 42 is butted against the differential bearing hole 13, if the cutting tool 40a and the cutting tool 40b are rotated, the inner circumferential surface of the differential bearing hole 13 can be cut to a diameter C.

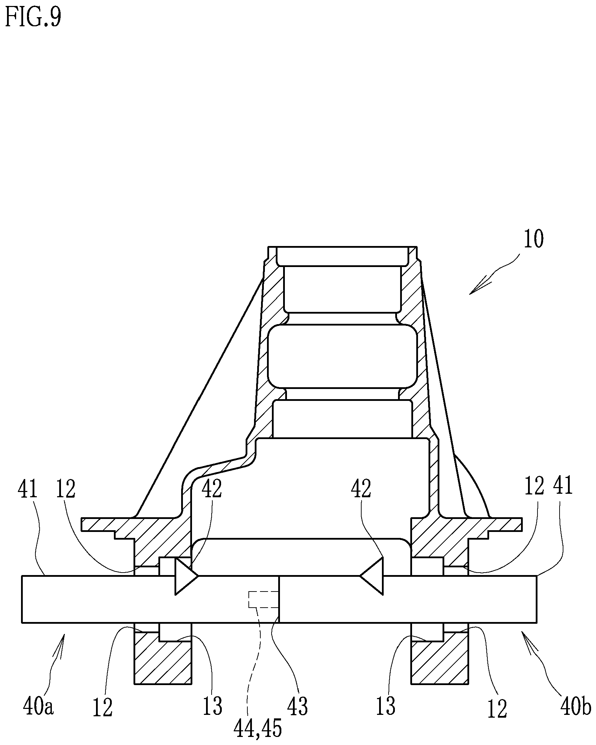

When the cutting tool 40a and the cutting tool 40b are moved in a direction (arrow c) such that each cutting blade 42 moves toward the differential bearing hole 13 on the left side from the state in Fig. 8, the cutting blade 42 butts against the differential bearing hole 13, and cutting of the differential bearing hole 13 starts. Fig. 9 is a view illustrating a state in which the differential bearing hole 13 is being cut with the cutting blade 42. In this state, cutting of approximately half of the differential bearing hole 13 in the depth direction thereof has been completed.

Fig. 10 is a perspective view of the vicinity of the workpiece 10 in a state during cutting of the differential bearing hole 13. In the state illustrated in Fig. 10, the extension part 44 has entered into the hole 45, and the abutment surfaces 43 butt against each other, and the cutting tool 40a and the cutting tool 40b are coupled and are both held by the housings 21 of the left and right machining units 4. In this state in which the cutting tools 40a and 40b are both held, when the cutting tool 40a and the cutting tool 40b are rotated around the center line, chattering is prevented and the accuracy of cutting the differential bearing holes 13 improves.

More specifically, in addition to an increase in accuracy with respect to the cylindricality, roundness and concentricity of the differential bearing hole 13, the accuracy of the surface roughness of the inner circumferential surface of the differential bearing hole 13 also increases. In particular, in Fig. 10, since the pair of differential bearing holes 13 are being cut, because the accuracy with respect to the concentricity of each of the differential bearing holes 13 increases, the central axes of the respective differential bearing holes 13 will also coincide with high accuracy.

As described above, by preventing chattering, the accuracy of cutting the differential bearing holes 13 also increase. In order to perform more stable cutting, it suffices to add a synchronization circuit to a control circuit of the machining units 4 to synchronize the rotational torques and positions of the cutting tool 40a and the cutting tool 40b.

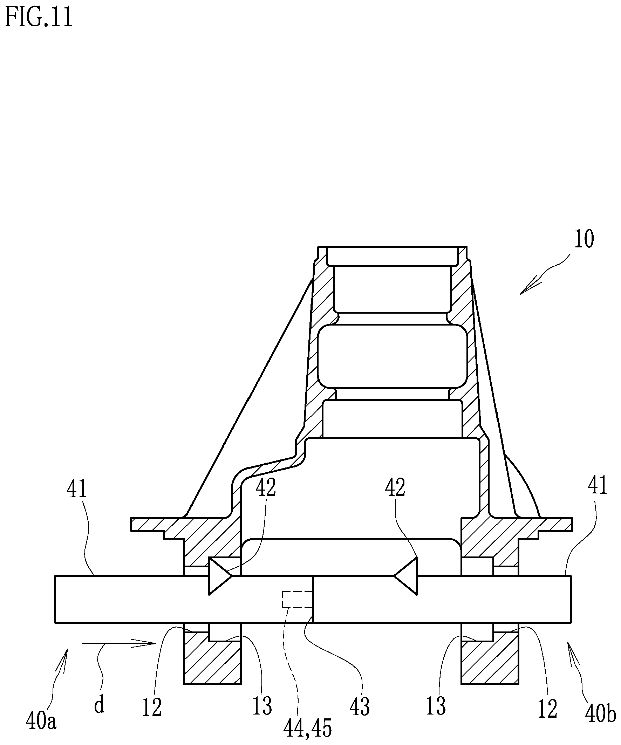

Fig. 11 a view illustrating a state in which cutting of the differential bearing hole 13 on the left side has been completed. In the state illustrated in Fig. 11, while the cutting tool 40a and the cutting tool 40b rotate around the center line, the cutting blade 42 moves as far as the end portion of the differential bearing hole 13 on the left side to thereby complete cutting of the differential bearing hole 13 on the left side. Thereafter, the cutting tool 40a and the cutting tool 40b are moved in a direction (arrow d) such that each cutting blade 42 moves toward the differential bearing hole 13 on the right side from the state in Fig. 11, to thereby transition to cutting of the differential bearing hole 13 on the right side.

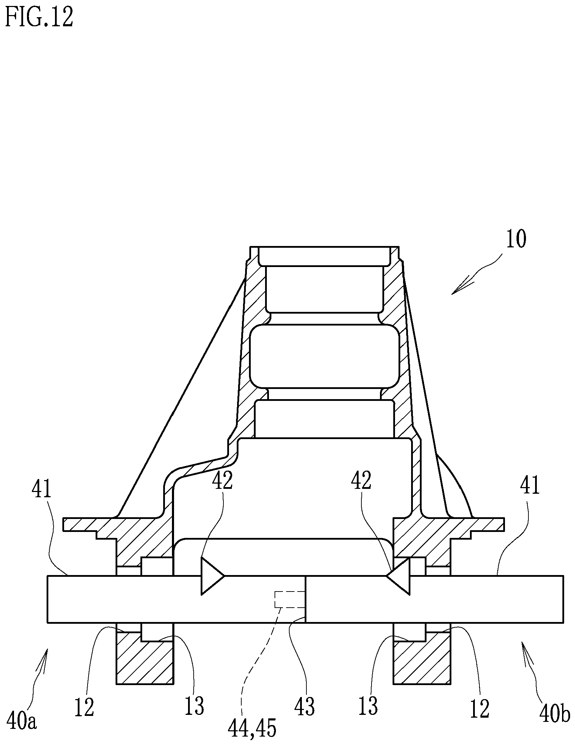

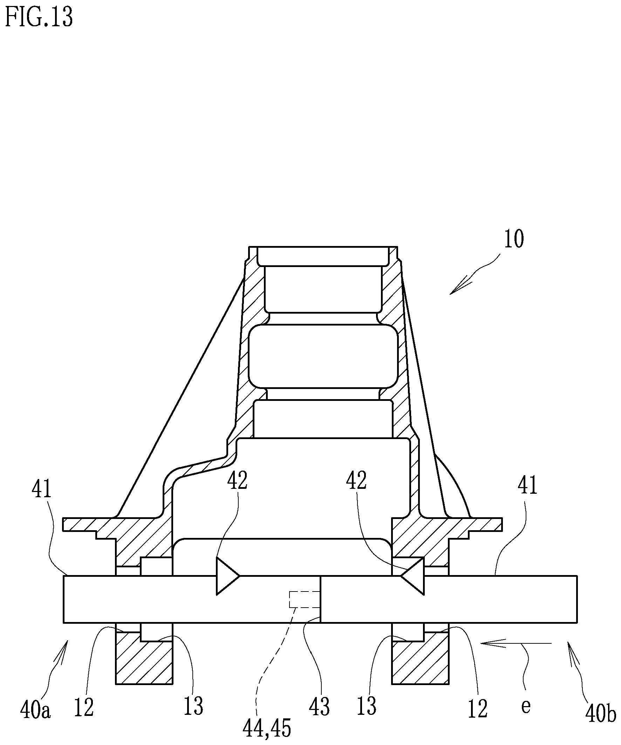

Cutting of the differential bearing hole 13 on the right side is performed in the same manner as the cutting of the differential bearing hole 13 on the left side except for the movement direction of the cutting tool 40a and the cutting tool 40b. Fig. 12 is a view illustrating a state in which the differential bearing hole 13 on the right side is being cut with the cutting blade 42. In this state, cutting of approximately half of the differential bearing hole 13 on the right side in the depth direction thereof has been completed. Fig. 13 is a view illustrating a state in which cutting of the differential bearing hole 13 on the right side has been completed. In the state illustrated in Fig. 13, the cutting blade 42 has moved as far as the end portion of the differential bearing hole 13 on the right side, and cutting of the differential bearing hole 13 on the right side is completed.

Thereafter, if the cutting tool 40a and the cutting tool 40b and the workpiece 10 are moved in the opposite directions to the directions in the process up to this point, the cutting tool 40a and the cutting tool 40b can be taken out from the workpiece 10. That is, when the cutting tool 40a and the cutting tool 40b are moved to the left side (arrow e) from the state illustrated in FIG. 13, the state illustrated in Fig. 8 is returned to, and when the workpiece 10 is retracted by the amount of Δ d from this state, the state illustrated in FIG. 7 is returned to, and if the cutting tool 40a and the cutting tool 40b are caused to move in opposite directions from this state so that the cutting tool 40a and the cutting tool 40b are separated from each other, the state illustrated in Fig. 5 in which the cutting tool 40a and the cutting tool 40b are on the outside of the workpiece 10 is returned to via the state illustrated in Fig. 6.

The process of cutting each of the differential bearing holes 13 may be divided into the two processes, namely, rough machining and finish machining, and if it is assumed that the machining by the cutting tool 40a and the cutting tool 40b is rough machining, finish machining of the left and right differential bearing holes 13 can be performed by exchanging the cutting tool 40a and the cutting tool 40b for cutting tools for finish machining and repeating the aforementioned series of processes.

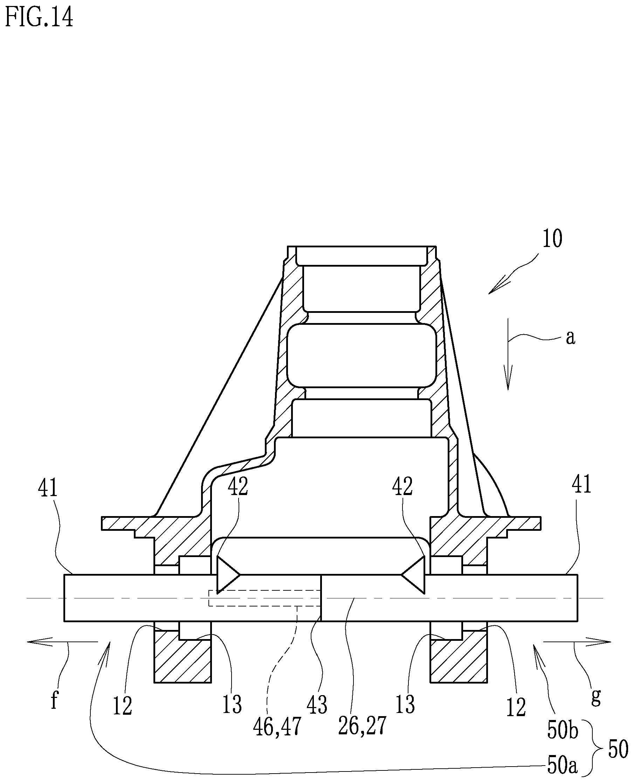

Although the cutting process described above using Fig. 5 to Fig. 13 is not a process which machines the left and right differential bearing holes 13 at the same time, in Fig. 4, by using cutting tools in which the length of the extension part 44 is increased and the length of the hole 45 is also increased to correspond to the increased length of the extension part 44, it is possible to simultaneously machine the left and right differential bearing holes 13, and the cutting time can thus be shortened. Fig. 14 is a view illustrating a coupled state of a cutting tool 50a and a cutting tool 50b when new cutting tools 50a and 50b are used. Fig. 14 is a view corresponding to Fig. 8 that illustrates a coupled state of the cutting tool 40a and the cutting tool 40b, in which the center line 27 of the respective shaft parts 41 of the cutting tool 50a and the cutting tool 50b already coincides with the center line 26 of each of the differential bearing holes 13. The process up to this state is the same as in the case of the cutting tool 40a and the cutting tool 40b.

In Fig. 14, with the exception of the fact that the length of an extension part 46 and of a hole 47 is long, the cutting tool 50a and the cutting tool 50b have the same configuration as the cutting tool 40a and the cutting tool 40b, and components which are the same in the cutting tools 40a and 40b and cutting tools 50a and 50b are denoted by the same reference numerals, and a description of such components is omitted hereunder. The length of the extension part 46 is a length such that, while one cutting tool for boring 50a and the other cutting tool for boring 50b are being moved in opposite directions to each other with respect to the direction of the center line 27 of the shaft parts 41, a state in which the extension part 46 has entered the hole 47 can be maintained when machining of the differential bearing holes 13 of the workpiece 10 is completed.

When the cutting tool 50a and the cutting tool 50b are moved in the direction in which the cutting tool 50a and the cutting tool 50b are separated from the state illustrated in FIG. 14 (arrows f and g), the cutting blade 42 of the cutting tool 50a moves toward the differential bearing hole 13 on the left side, and the cutting blade 42 of the cutting tool 50b moves toward the differential bearing hole 13 on the right side. When movement of the cutting tool 50a and the cutting tool 50b in opposite directions to each other while rotating around the center line progresses, the differential bearing hole 13 on the left side is cut by the cutting blade 42 of the cutting tool 50a, and the differential bearing hole 13 on the right side is cut by the cutting blade 42 of the cutting tool 50b.

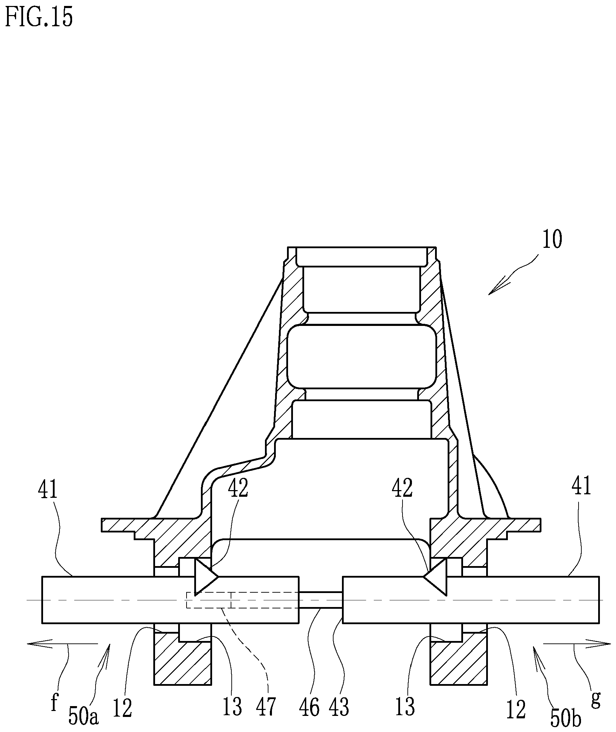

Fig. 15 is a view illustrating a state in which the left and right differential bearing holes 13 are being cut by the cutting blades 42. As illustrated in Fig. 15, because the respective cutting blades 42 of the cutting tool 50a and the cutting tool 50b come in contact with the respective differential bearing holes 13, the left and right differential bearing holes 13 can be machined simultaneously by the cutting tool 50a and the cutting tool 50b. In the state illustrated in Fig. 15, cutting of approximately half of the left and right differential bearing holes 13 in the depth direction thereof has been completed.

During the period in which cutting of the left and right differential bearing holes 13 is being performed, since the extension part 46 is inside the hole 47, the state is one in which the cutting tool 50a and the cutting tool 50b are coupled through the extension part 46 and the hole 47, and are both held by the respective housings 21 (see Fig. 10) of the left and right machining units 4. Therefore, similarly to the case of the cutting tool 40a and the cutting tool 40b, chattering during rotation is prevented, and the accuracy of cutting the differential bearing holes 13 is increased.

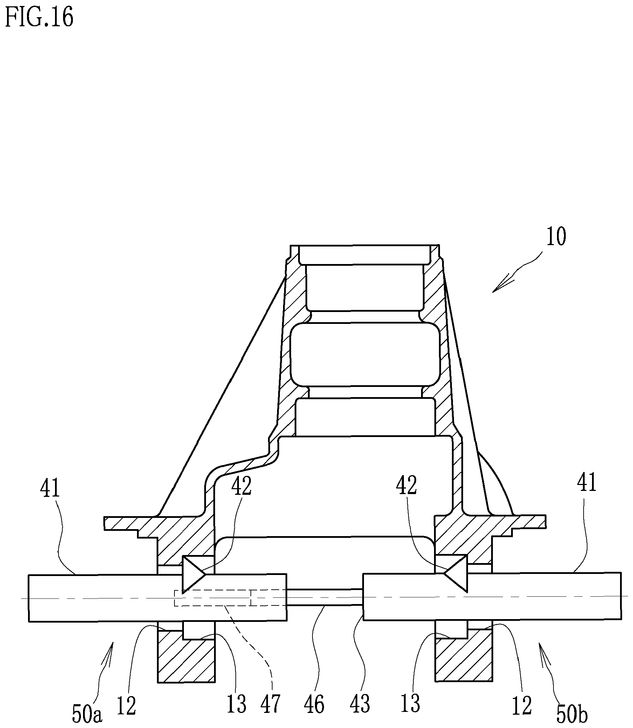

Subsequently, when movement of the cutting tool 50a and the cutting tool 50b in opposite directions to each other progresses, cutting of the left and right differential bearing holes 13 also progresses. Fig. 16 is a view illustrating a state in which cutting of the left and right differential bearing holes 13 has been completed. In the state illustrated in Fig. 16, the tip edges of the respective cutting blades 42 have moved as far as the end portions of the left and right differential bearing holes 13, and cutting of the left and right differential bearing holes 13 has been completed. Thereafter, the process of taking out the cutting tool 50a and the cutting tool 50b from the workpiece 10 is the same as in the case of the cutting tool 40a and the cutting tool 40b.

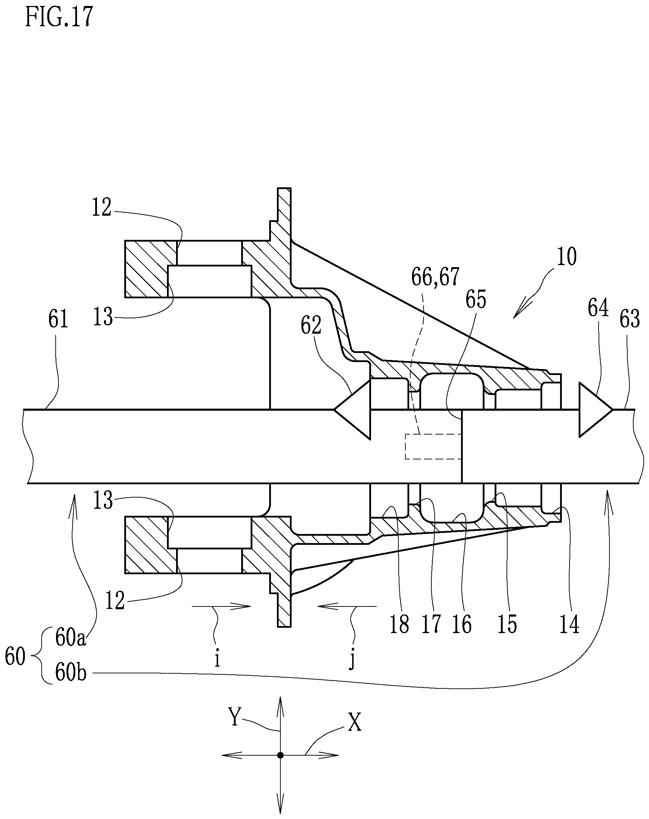

Although in the foregoing embodiment the object of machining by the cutting tool 40 and the like is the differential bearing hole 13 of the workpiece 10, the cutting tool according to the present disclosure is a cutting tool that prevents chattering and increases the accuracy of cutting of an inner circumferential surface of a hole, and an object of machining by the cutting tool is not limited to the differential bearing hole 13. Fig. 17 illustrates a state before a cutting tool 60 that is constituted by a pair composed of a cutting tool 60a and a cutting tool 60b cuts the pinion hole 18 and the oil seal hole 14.

From the state in which cutting of the pair of differential bearing holes 13 has been completed that is illustrated in Fig. 13, if the cutting tool 40a and the cutting tool 40b are taken out from the workpiece 10, the state will return to the state illustrated in Fig. 5. If the cutting tool 40a and the cutting tool 40b retracted from this state, and the rotary mount 35 (see Fig. 3) is rotated to cause the workpiece 10 to rotate by 90 degrees (arrow h), a vertical axis 36 of the workpiece 10 will be parallel with the X-axis (see Fig. 3). Fig. 17 illustrates a state after replacing the cutting tool 40 with the cutting tool 60, in which abutment surfaces 65 of the cutting tool 60a and the cutting tool 60b butt against each other, and an extension part 66 of the cutting tool 60b has entered inside a hole 67 of the cutting tool 60a.

The cutting tool 60a is for machining the pinion hole 18, and includes a shaft part 61 having an abutment surface 65 at the tip thereof, and a cutting blade 62 which is attached to the shaft part 61 at a position at which the cutting blade 62 can perform machining of the pinion hole 18. The cutting tool 60b is for machining the oil seal hole 14, and includes a shaft part 63 having an abutment surface 65 at the tip thereof, and a cutting blade 64 which is attached to the shaft part 63 at a position at which the cutting blade 64 can perform machining of the oil seal hole 14. From the state illustrated in Fig. 17, when the cutting tools 60 are moved in a direction (arrow i) in which the cutting blade 62 moves toward the inside of the pinion hole 18 while rotating the cutting tools 60 around the center line, the inner circumferential surface of the pinion hole 18 is cut by the cutting blade 62. After performing cutting of the pinion hole 18, when the cutting tools 60 are moved in a direction (arrow j) in which the cutting blade 64 moves toward the inside of the oil seal hole 14, the inner circumferential surface of the oil seal hole 14 is cut by the cutting blade 64.

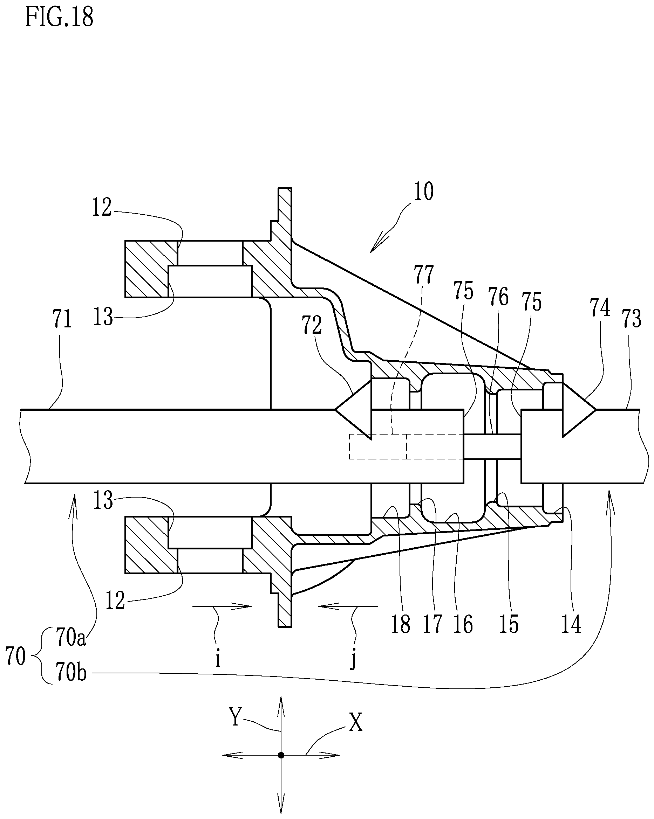

Fig. 18 illustrates a state before the pinion hole 18 and the oil seal hole 14 are cut with cutting tools that are different from the cutting tools illustrated in Fig. 17. A cutting tool 70a is for machining the pinion hole 18, and includes a shaft part 71 having an abutment surface 75 at the tip thereof, and a cutting blade 72 that is attached to the shaft part 71 at a position at which the cutting blade 72 can perform machining of the pinion hole 18. The cutting tool 70b is for machining the oil seal hole 14, and includes a shaft part 73 having an abutment surface 75 at the tip thereof, and a cutting blade 74 which is attached to the shaft part 73 at a position at which the cutting blade 74 can perform machining of the oil seal hole 14. The cutting tool 70a and the cutting tool 70b have the same configuration as the cutting tool 60a and the cutting tool 60b, except that the length of an extension part 76 and a hole 77 is longer than the length of the extension part and hole of the cutting tools 60a and 60b.

When the cutting tool 70a is moved in a direction (arrow i) in which the cutting blade 72 moves toward the inside of the pinion hole 18 while rotating the cutting tool 70a around the central axis, the inner circumferential surface of the pinion hole 18 is cut by the cutting blade 72. On the other hand, when the cutting tool 70b is moved in a direction (arrow j) in which the cutting blade 74 moves toward the inside of the oil seal hole 14 while rotating the cutting tool 70b around the central axis, the inner circumferential surface of the oil seal hole 14 is cut by the cutting blade 74.

In the case of using the cutting tool 70 as illustrated in Fig. 18, it is possible to perform machining of the pinion hole 18 and the oil seal hole 14 simultaneously, and the work time can be shortened. Further, during the period in which cutting of the pinion hole 18 and the oil seal hole 14 is being performed, since the extension part 76 is inside the hole 77, the state is one in which the cutting tool 70a and the cutting tool 70b are coupled through the extension part 76 and the hole 77, and are both held by the respective housings 21 (see Fig. 10) of the left and right machining units 4. Therefore, in the case of using the cutting tools 70 also, chattering during rotation is prevented, and the accuracy of cutting the pinion hole 18 and the oil seal hole 14 is increased.

Since the series of cutting processes for cutting the differential bearing holes 13, and the pinion hole 18 and the oil seal hole 14 described above can be performed continuously in a state in which the workpiece 10 is held by the clamper 34 (see Fig. 3) and without remounting the workpiece 10, the perpendicularity between the central axes of the differential bearing holes 13 and the pinion hole 18 and the oil seal hole 14 is also highly accurate. Further, it is possible to perform cutting of the pinion hole 18 and the oil seal hole 14 that are two holes with different diameters by changing the cutting tool once.

Although in the embodiments described above, with regard to each of the cutting tool 40, the cutting tool 50 and the like, an extension part is provided on one of the abutment surfaces 43, a configuration may also be adopted in which an extension part is not provided, or in which the shape of the extension part is appropriately changed. Hereunder, various embodiments of a tip portion of a cutting tool are described with reference to Fig. 19. In a cutting tool 80 illustrated in Fig. 19(a), with respect to each of one cutting tool 80a and the other cutting tool 80b, an extension part is not provided on the abutment surface 43. In this configuration, in order to prevent slipping when the abutment surfaces 43 are butted together, it is desirable to polish the abutment surfaces 43 to improve the accuracy of the flatness and perpendicularity and reduce the surface roughness.

In a cutting tool 81 illustrated in Fig. 19(b), with respect to each of one cutting tool 81a and the other cutting tool 81b, the diameter of the abutment surface 43 is enlarged so as to prevent slipping when the abutment surfaces 43 are butted together. In a cutting tool 82 illustrated in Fig. 19(c), an extension part 84 is provided in a cutting tool 82b, and a groove 85 for the extension part 84 to enter is provided in a cutting tool 82a. Whilst the extension part 84 is laterally long and not longitudinally long as in the case of the extension part 44 illustrated in Fig. 4, with this configuration also it is possible to prevent slipping when the abutment surfaces 43 are butted together.

Although in the embodiments described above, an object of machining of the cutting tool 40 and the like is a hole formed in a differential carrier, as described above, the cutting tool according to the present disclosure is a tool that prevents chattering and increases the accuracy of cutting of an inner circumferential surface of a hole, and the object of machining of the cutting tool is not limited to a hole formed in a differential carrier. The object of machining of the cutting tool 40 and the like may be, for example, a side gear hole of a differential case.

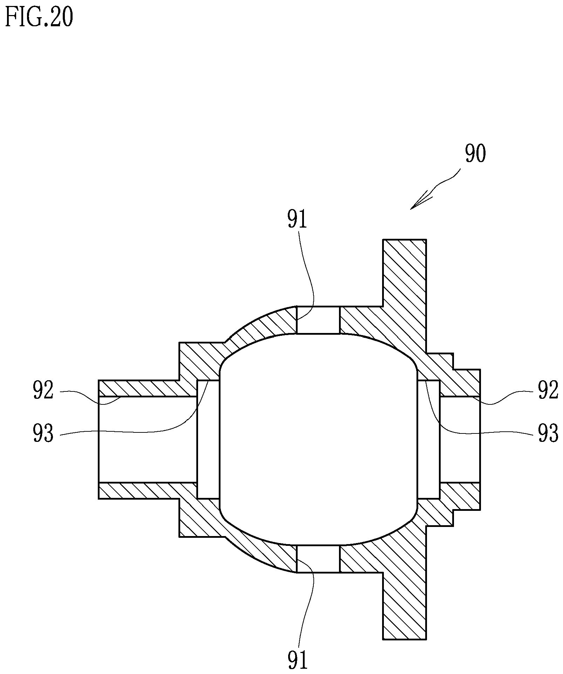

Fig. 20 is a longitudinal sectional view of one example of a differential case. In the figure, shaft holes 91 are formed in the side surface of a central main body portion, a pair of stepped holes formed of a small-diameter hole forming an axle hole 92 and a large-diameter hole forming a side gear hole 93 are formed on both sides of the main body portion. The configuration of the stepped holes is the same as the configuration of the pair of stepped holes formed by the small-diameter hole forming the differential bearing seat surface 12 and the large-diameter hole forming the differential bearing hole 13 illustrated in Fig. 2. Therefore, even if the differential carrier 10 is replaced with the differential case 90, the processes illustrated in Fig. 5 to Fig. 13 can be performed. Reference Signs List
1 machining apparatus
3 shuttle unit
4 machining unit
10 workpiece (differential carrier)
12 differential bearing seat surface
13 differential bearing hole
40, 50, 60, 70, 80, 81, 82 set of two cutting tools
40a, 40b, 50a, 50b, 60a, 60b, 70a, 70b, 80a, 80b, 81a, 81b, 82a, 82b cutting tool
41, 61, 63, 71, 73 shaft part
42, 62, 64, 72, 74 cutting blade
43, 65, 75 abutment surface
44, 46, 66, 76 extension part
45, 47, 67, 77 hole
90 workpiece (differential case)
92 axle hole
93 side gear hole

## Claims

1. A cutting tool for boring that is attached to a machining apparatus and used for performing cutting of a hole on a large-diameter side of a stepped hole of a workpiece,
the machining apparatus comprising a pair of left and right machining units arranged opposing each other so as to sandwich a workpiece,
the cutting tool for boring being provided in a set of two which are attached to the pair of left and right machining units respectively,
each of the cutting tools for boring in the set of two comprising:
a shaft part;
a cutting blade laterally protruding from the respective shaft parts; and
an abutment surface that is formed at a tip of the respective shaft parts and that is for causing the tips of the respective shaft parts to butt against each other,
wherein:
each of the cutting tools for boring performs the cutting while the two cutting tools for boring rotate integrally around a center line of the shaft part in a coupled state in which the tips of the respective cutting tools for boring are butted together.

2. The cutting tool for boring according to claim 1, wherein:
among the cutting tools for boring of the set of two, one cutting tool for boring is provided with an extension part extending from the abutment surface, and the other cutting tool for boring is provided with a hole into which the extension part enters.

3. The cutting tool for boring according to claim 2, wherein:
a length of the extension part is a length that, while the one cutting tool for boring and the other cutting tool for boring are being moved in opposite directions to each other with respect to a center line direction of the shaft part, is able to maintain a state in which the extension part has entered the hole, when machining of a hole of the workpiece is completed.

4. A machining apparatus that uses the cutting tool for boring according to any one of claims 1 to 3, comprising:
a pair of left and right machining units arranged opposing each other so as to sandwich a workpiece.

5. A method for boring using the cutting tool for boring according to any one of claims 1 to 3, wherein:
in a state in which the cutting tools for boring of the set of two are arranged so that the abutment surfaces of the respective cutting tools for boring in the set of two are butted together, and a rear end side of each of the cutting tools for boring is supported by the machining apparatus,
while causing the cutting tools for boring of the set of two to rotate around the center line and to move in the center line direction, an inner circumferential surface of a hole of the workpiece is cut with the cutting blade.
